# EUROPEAN PATENT APPLICATION

(11) **EP 1 792 670 A1**
(43) Date of publication of application: **06.06.2007**
(21) Application number: 05028700.2
(22) Date of filing: 30.12.2005
(51) Int. Cl.: B21D 5/08, B62D 21/02

(54) **Process for manufacturing of an elongated metal beam and elongated metal beam as a vehicle body component**

(30) Priority: 05.12.2005 EP 05026480
(71) Applicant: Wagon Automotive GmbH, 63857 Waldaschaff (DE)
(72) Inventor: Behre, Rüdiger, 63322 Rödermark (DE)
(74) Representative: Gesthuysen, von Rohr & Eggert

(57) **Abstract**

Process for manufacturing of an elongated metal beam (3) used as a vehicle body component, wherein the metal beam (3) in its lengthwise direction finally has at least one segment (4) with a full cross section, followed by a tapering segment (5) with tapering of the cross section in one direction - the tapering direction - from the full cross section to a reduced cross section, followed by a segment (6) with reduced cross section. The process comprises the following manufacturing steps: Providing a planar strip of metal sheet material with a predetermined width and continuously feeding the planar strip to a roll forming station. In the roll forming station roll forming the planar strip into a shaped strip (7) with a closed cross section or an essentially U-shaped cross section. Thereafter forming the tapering segment (5) of the shaped strip (7) by progressively displacing at least one wall - the thrust wall (8) - of the shaped strip (7) in the tapering direction towards an opposite wall (9) or an opposite open side of the shaped strip (7). During roll forming of the planar strip to the shaped strip (7) at least one lengthwise extending bead (10) is roll formed into the one wall or the two opposite walls of the shaped strip (7) that extends or extend in the tapering direction - the bending wall or walls (11) -. Each bead (10) provides a predetermined bending area of the corresponding bending wall (11). Forming of the tapering segment (5) of the shaped strip (7) is done by progressively compressing the bead or beads (10) from a large cross section in the segment of the shaped strip (7) with the full cross section to a small cross section in the segment of the shaped strip (7) with reduced cross section whilst leaving the other areas of the bending wall or walls (11) essentially unaltered.

## Description

The invention relates on the one hand to a process for manufacturing of an elongated metal beam used as a vehicle body component, in particular used as a side impact protection beam, according to the features of the generic part of claim 1, on the other hand to an elongated metal beam as a vehicle body component, in particular a side impact protection beam, comprising the features of the generic part of claim 11.

To protect occupants of a motor vehicle it is well known to use elongated metal beams as a vehicle body component at different locations of the vehicle body. One important example of such an elongated metal beam is a side impact protection beam within the side door of the passenger compartment of a motor vehicle. However, other locations for elongated metal beams are longitudinal support beams for the vehicle body, bumper cross beams, dashboard reinforcement beams or the like.

For many applications it is necessary or recommended to use high strength steels or ultra high strength steels to provide the required strength of the metal beam. Manufacturing of an elongated metal beam from high strength or ultra high strength steel is a complicated process. In particular deep drawing is a manufacturing method that is not well suited to the demands of manufacturing for such high strength material.

Moreover, it is desirable to provide a continuous manufacturing process for this kind of product. Here roll forming of a planar strip of metal sheet material with a predetermined width is an advisable and cost-effective process.

A demand related to elongated metal beams as vehicle body components is that the ends of the metal beams or at least one end should have a reduced cross section so that the metal beam may be easily connected to a surrounding framework of the vehicle body. Of course, in an inverted structure there would be an expanded cross section at the end of the metal beam.

Reduction of the cross section is achieved in the prior art process for manufacturing of an elongated metal beam (EP 1 344 583 B1) with the following manufacturing steps:
A shaped strip is manufactured from a planar strip by rolling before being stamped in sections in such a way that at least two sections are mutually displaced vertically with respect to the longitudinal extension of the strip. After stamping the shaped profile is bent in such a way that the mutually displaced sections present a different cross section. The elongated metal beam shows an essentially U-shaped cross section with two different depths in the segment with full cross section and the segment with reduced cross section. This is done in such a way that the lower parts of the U-shaped profiles are mutually displaced in the two segments. The shaped strip is bent after stamping in such a way that the edges of the U-shaped arms of the sections are cut substantially to the same height.

Above explained manufacturing process needs stamping and cutting operations and, in particular, is a non-continuous process. The object of the present invention is to provide a corresponding process that needs no stamping or cutting operations to achieve the lengthwise following segments of different cross section and can be performed as a continuous process.

The above mentioned object is achieved with a process comprising the features of claim 1. The corresponding elongated metal beam meeting this object is defined by the features of claim 11.

Further modifications of the method and the product may be obtained from the respective dependent claims.

Each bead in the respective bending wall provides a predetermined bending area that can be used during further roll forming to change the cross section of the bead with the result that the overall cross section of the shaped strip is progressively reduced accordingly. In an inverted process the beads would be used for expansion later. Neither stamping nor cutting operations are necessary, because the change of the measures in the tapering direction is achieved by a bending operation only. This manufacturing method perfectly corresponds to the use of high strength metal, in particular high strength or ultra high strength steel sheet material that is likely subject to rupture if stamped or cut. The extent of the change in cross section is substantial and much more than a deep drawing method could achieve. Moreover, the complete process can be performed continuously in a roll forming apparatus.

Further details and advantages of the invention can be obtained from the exemplary embodiments explained with reference to the drawings. In the drawings
- Fig. 1: is a schematic side view of a motor vehicle with side impact protection beams indicated in the side doors of the vehicle body,
- Fig. 2: is an example of such a side impact protection beam,
- Fig. 3 to 7: are examples for different cross sections of metal beams according to the invention in the different segments of those beams.

In general the process of the invention is directed to manufacturing of an elongated metal beam 3 that is to be used as a vehicle body component. One prominent example for such beam is a side impact protection beam 3 as used in a side door 2 of a motor vehicle 1.

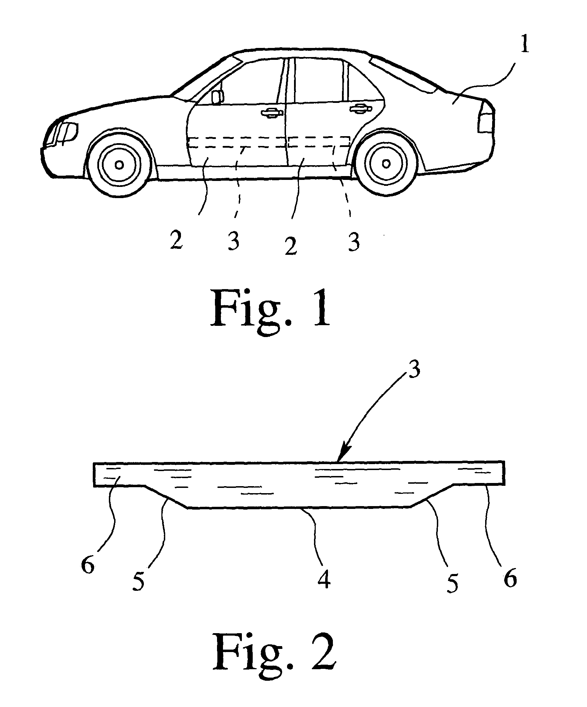

Fig. 1 shows a motor vehicle 1 with side doors 2 each provided with a side impact protection beam 3. Such side impact protection beam 3 is a prominent example for an elongated metal beam as a vehicle body component according to the invention. The side impact protection beam 3 as such is shown in an example in Fig. 2. Obviously the side impact protection beam 3 shall have the largest possible cross section in the middle segment 4, but needs tapering segments 5 at both ends of the middle segment 4 as a transition from the middle segment 4 of full cross section to the end segments 6 with reduced cross section where the side impact protection beam 3 is attached, preferably by welding, riveting and/or screwing to a surrounding framework here of the side door 2.

The invention is directed to the process for manufacturing such an elongated metal beam 3, here a side impact protection beam 3. The basic manufacturing steps are:
Providing a planar strip of metal sheet material with a predetermined width and continuously feeding the planar strip to a roll forming station. In the roll forming station roll forming the planar strip into a shaped strip 7 with a closed cross section or an essentially U-shaped cross section. Thereafter forming the tapering segment 5 of the shaped strip 7 by progressively displacing at least one wall - the thrust wall 8 - of the shaped strip 7 in the tapering direction towards an opposite wall 9 or an opposite open side of the shaped strip 7.

In the inventive manufacturing process it is provided that during roll forming of the planar strip to the shaped strip 7 at least one lengthwise extending bead 10 is roll formed into the one wall or the two opposite walls of the shaped strip 7 that extends or extend in the tapering direction - the bending wall or walls 11 -, each bead 10 providing a predetermined bending area of the corresponding bending wall 11. Forming of the tapering segment 5 of the shaped strip 7 is done by progressively compressing the bead or beads 10 from a large cross section in the segment 6 of the shaped strip 7 with the full cross section to a small cross section in the segment 6 of the shaped strip 7 with reduced cross section whilst leaving the other areas of the bending wall or walls 11 essentially unaltered.

The elongated metal beam 3 manufactured following the inventive process claimed here is characterized by the bead or beads 10 extending over the full length of the elongated metal beam 3 but with different cross sections of the bead or beads 10 over the length of the beam 3 according to the different segments 4, 5, 6 whose cross section is modified by the different cross section of the bead or beads 10 only. In general it is possible that the bead or beads 10 don't extent over the full length of the elongated metal beam 3 but only over a part of the length of this elongated metal beam 3. This part may be the area where the modification of the cross section takes place.

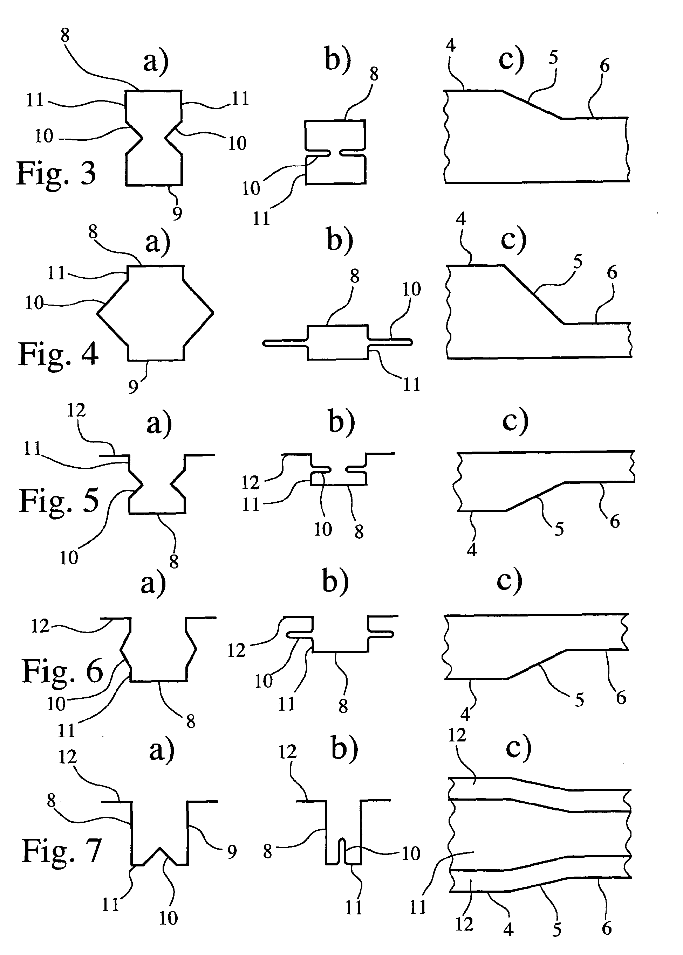

Now, Fig. 3 shows as part a) a first embodiment of the invention with the shaped strip 7 here shown in the segment with full cross section, Fig. 3 b) shows the segment 6 of the shaped strip 7 with the reduced cross section, probably the end segment 6 of the beam, whereas Fig. 3 c) shows a side view of the beam 3 in and around the tapering segment 5 defined by the progressively reduced cross section of the beads 10 in the opposite bending walls 11. This is only a schematic display. In particular, the bending lines on the sheet metal are not shown.

The specific embodiment of Fig. 3 is characterized in that the shaped strip 7 has an essentially rectangular closed cross section, the upper and lower walls are the thrust walls 8, the right and left walls are the bending walls 11 and the beads 10 in the bending walls 11 extend towards the interior of the shaped strip 7.

Fig. 4 shows an embodiment of the invention characterized in that the shaped strip 7 has an essentially rectangular closed cross section, the upper and lower walls are the thrust walls 8, the right and left walls are the bending walls 11 and the beads 10 in the bending walls 11 extend towards the exterior of the shaped strip 7.

Fig. 5 shows an embodiment not with a shaped strip 7 of rectangular closed cross section, but with an essentially U-shaped cross section with outwardly extending flanges 12 at the open top side. This is characterized in that the lower wall opposite to the open top side is the thrust wall 8, the right and left walls are the bending walls 11 and the beads 10 in the bending walls 11 extend towards the interior of the shaped strip 7.

Fig. 6 shows an embodiment similar to Fig. 5 with the difference that the beads 10 in the bending walls 11 extend towards the exterior of the shaped strip 7.

Finally, Fig. 7 shows an embodiment with U-shaped cross section of the shaped strip 7 characterized in that the shaped strip 7 has an essentially U-shaped open cross section with outwardly extending flanges 12 at the open top side, the right and left walls are the thrust walls 8, the lower wall opposite to the open top side is the bending wall 11 and the bead or beads 10 in the bending wall 11 extends or extend towards the interior of the shaped strip 7.

As explained in the introductory part of the description it is preferred that the metal sheet material is made from high strength or ultra high strength steel. For details of these steels please refer to publications of ThyssenKrupp published on their website (ThyssenKrupp Stahl "Forming properties of high-strength and ultra high-strength multi-phase steels"; available here since October 11, 2005). Eliminating the necessity to perform stamping or cutting operations on this type of steel reduces the risk that ruptures of the steel sheet material will happen.

However, in general the method can be used for aluminum or other light weight metal sheet material, too. Further, as already explained in the introductory part of the description, closing of the shaped strip 7 is done by welding, in particular spot welding. In general, of course, the typical connecting methods apply here.

As explained above the invention is addressing not only a process for manufacturing such an elongated metal beam 3, but the typical construction of a elongated metal beam 3 as such showing above mentioned and explained features.

## Claims

1. Process for manufacturing of an elongated metal beam (3) used as a vehicle body component,
wherein the metal beam (3) in its lengthwise direction finally has at least one segment (4) with a full cross section, followed by a tapering segment (5) with tapering of the cross section in one direction - the tapering direction - from the full cross section to a reduced cross section, followed by a segment (6) with reduced cross section,
the process comprising the following manufacturing steps:
- providing a planar strip of metal sheet material with a predetermined width and continuously feeding the planar strip to a roll forming station,
- in the roll forming station roll forming the planar strip into a shaped strip (7) with a closed cross section or an essentially U-shaped cross section, and
- thereafter forming the tapering segment (5) of the shaped strip (7) by progressively displacing at least one wall - the thrust wall (8) - of the shaped strip (7) in the tapering direction towards an opposite wall (9) or an opposite open side of the shaped strip (7),
**characterized in that**
during roll forming of the planar strip to the shaped strip (7) at least one lengthwise extending bead (10) is roll formed into the one wall or the two opposite walls of the shaped strip (7) that extends or extend in the tapering direction - the bending wall or walls (11) -, each bead (10) providing a predetermined bending area of the corresponding bending wall (11),
forming of the tapering segment (5) of the shaped strip (7) is done by progressively compressing the bead or beads (10) from a large cross section in the segment of the shaped strip (7) with the full cross section to a small cross section in the segment of the shaped strip (7) with reduced cross section whilst leaving the other areas of the bending wall or walls (11) essentially unaltered.

2. Process according to claim 1, **characterized in that**
the shaped strip (7) has an essentially rectangular closed cross section,
the upper and lower walls are the thrust walls (8),
the right and left walls are the bending walls (11),
the beads (10) in the bending walls (11) extend towards the interior of the shaped strip (7).

3. Process according to claim 1, **characterized in that**
the shaped strip (7) has an essentially rectangular closed cross section,
the upper and lower walls are the thrust walls (8),
the right and left walls are the bending walls (11),
the beads (10) in the bending walls (11) extend towards the exterior of the shaped strip (7).

4. Process according to claim 1, **characterized in that**
the shaped strip (7) has an essentially U-shaped open cross section with outwardly extending flanges (12) at the open top side,
the lower wall opposite to the open top side is the thrust wall (8),
the right and left walls are the bending walls (11),
the beads (10) in the bending walls (11) extend towards the interior of the shaped strip (7).

5. Process according to claim 1, **characterized in that**
the shaped strip (7) has an essentially U-shaped open cross section with outwardly extending flanges (12) at the open top side,
the lower wall opposite to the open top side is the thrust wall (8),
the right and left walls are the bending walls (11),
the beads (10) in the bending walls (11) extend towards the exterior of the shaped strip (7).

6. Process according to claim 1, **characterized in that**
the shaped strip (7) has an essentially U-shaped open cross section with outwardly extending flanges (12) at the open top side,
the right and left walls are the thrust walls (8),
the lower wall opposite to the open top side is the bending wall (11),
the bead or beads (10) in the bending wall (11) extends or extend towards the interior of the shaped strip (7).

7. Process according to any one of the preceding claims, **characterized in that**
the metal sheet material is made from high strength or ultra high strength steel.

8. Process according to any one of the preceding claims, **characterized in that**
closing of the shaped strip (7) is done by welding, in particular spot welding.

9. Process according to any one of the preceding claims, **characterized in that**
the at least one bead (10) is extending only over a part of the length of the shaped strip (7).

10. Process according to any one of the preceding claims, **characterized in that**
instead of compressing the bead or beads (10) from a large cross section to a small cross section the process is performed by progressively extending the bead or beads (10) from a small cross section to a large cross section.

11. Elongated metal beam (3) as a vehicle body component,
in particular side impact protection beam (3),
comprising a shaped strip (7) of metal sheet material with a closed cross section or an essentially U-shaped cross section,
wherein the metal beam (3) in its lengthwise direction finally has at least one segment (4) with a full cross section, followed by a tapering segment (5) with tapering of the cross section in one direction - the tapering direction - from the full cross section to a reduced cross section, followed by a segment (6) with reduced cross section,
preferably, wherein the metal beam (3) has both ends provided as segments with reduced cross section,
**characterized in that**
at least one lengthwise extending bead (10) is provided in the one wall or the two opposite walls of the shaped strip (7) that extends or extend in the tapering direction - the bending wall or walls (11)-,
in the tapering segment (5) of the shaped strip (7) the bead or beads (10) are progressively narrowing from a large cross section in the segment (4) of the shaped strip (7) with the full cross section to a small cross section in the segment (6) of the shaped strip (7) with reduced cross section.

12. Metal beam according to claim 11, **characterized by**
the features of the characterizing part of claim 2 or claim 3 or claim 4 or claim 5 or claim 6 and/or the features of the characterizing part of claim 7 and/or claim 8 and/or claim 9 and/or claim 10.
